(19) Europäisches Patentamt
European Patent Office
Office européen des brevets

(11) **EP 3 987 153 B1**

(12) **EUROPEAN PATENT SPECIFICATION**

(45) Date of publication and mention
of the grant of the patent:
**30.07.2025 Bulletin 2025/31**

(21) Application number: **20826898.7**

(22) Date of filing: **16.06.2020**

(51) International Patent Classification (IPC):
*E21B 43/20* (2006.01)    *B01D 61/02* (2006.01)
*C02F 1/44* (2023.01)    *C02F 103/08* (2006.01)
*C09K 8/58* (2006.01)    *B01D 61/00* (2006.01)

(52) Cooperative Patent Classification (CPC):
**C02F 1/445; B01D 61/0022; E21B 43/20;**
C02F 2103/08

(86) International application number:
**PCT/US2020/037905**

(87) International publication number:
**WO 2020/257179 (24.12.2020 Gazette 2020/52)**

(54) **WATER INJECTION INTO A HYDROCARBON RESERVOIR**

WASSEREINSPRITZUNG IN EIN KOHLENWASSERSTOFFRESERVOIR

INJECTION D'EAU DANS UN RÉSERVOIR D'HYDROCARBURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2019 US 201962864315 P**

(43) Date of publication of application:
**27.04.2022 Bulletin 2022/17**

(73) Proprietor: **Conocophillips Company
Houston, Texas 77079 (US)**

(72) Inventors:
 • **JANSON, Arnold
 Houston, Texas 77079 (US)**
 • **ADHAM, Samer
 Houston, Texas 77079 (US)**
 • **MINIER-MATAR, Joel
 Houston, Texas 77079 (US)**

 • **DARDOR, Dareen
 Houston, Texas 77079 (US)**
 • **SHARMA, Ramesh
 Houston, Texas 77079 (US)**
 • **AL-MAAS, Mashael
 Houston, Texas 77079 (US)**

(74) Representative: **Simpson, Paul Christopher
ConocoPhillips (U.K.) Limited
20th Floor
1 Angel Court
London EC2R 7HJ (GB)**

(56) References cited:
WO-A1-2018/136077    US-A1- 2007 246 426
US-A1- 2008 169 098    US-A1- 2008 169 098
US-A1- 2009 008 330    US-A1- 2012 012 511
US-A1- 2012 037 566    US-A1- 2012 285 886
US-A1- 2013 161 256    US-A1- 2015 260 028
US-A1- 2015 260 028    US-A1- 2015 352 497
US-A1- 2015 353 397    US-A1- 2017 369 338

EP 3 987 153 B1

**Description**

FIELD OF THE INVENTION

This invention relates to the injection of water under pressure into a hydrocarbon reservoir to facilitate the recovery of hydrocarbons from the reservoir.

BACKGROUND OF THE INVENTION

The oil & gas industry continuously strives to increase the recovery of hydrocarbons from underground reservoirs. One widely used technique is called "waterflooding": the injection of water into the reservoir to increase pressure and displace hydrocarbons from within the formation. This is considered "secondary recovery" and typically follows "primary recovery" wherein the natural pressure and conditions result in hydrocarbon production. The injection of water is associated with an energy cost; increasingly producers are seeking to lower the cost of production of hydrocarbons and there is an ongoing need to reduce the energy input and therefore the financial cost of waterflooding.

The water used for waterflooding typically comes from either produced water (PW), i.e. groundwater simultaneously extracted with the oil, or seawater. Seawater and PW can also be mixed and in that case, it is referred to as commingling. Depending on the composition of the two streams, commingling can result in undesirable precipitation of solids. One example is the formation of highly insoluble barium sulfate: PW can be high in barium and when commingled with seawater high in sulfate; the barium sulfate solubility limit is exceeded and it precipitates. This precipitation is highly undesirable as it can lead to plugging of the reservoir with solids and reduce the effectiveness of waterflooding and/or add to the pumping energy needed.

The water used for waterflooding must also be compatible with the reservoir's connate water. If there is an incompatibility, undesirable solids can form due to chemical interactions between the PW/seawater and the connate water.

The effectiveness of waterflooding is directly affected by the volume of water used and its chemistry. In general, the more water used, the higher the secondary oil recovery. It has been proposed that water of lower salinity is more effective than relatively high salinity water for secondary oil recovery (see US patent 7,455,109).

Some known sources of water for waterflooding include:

a) Produced water (PW);
b) Produced water commingled with desalinated seawater;
c) Produced water commingled with seawater;
d) Seawater;
e) Nanofiltered seawater (filtered to remove divalent ions).

Each of these options face challenges:
Regarding (a), produced water typically has a very high salinity which can reduce its effectiveness in waterflooding applications. Also, depending on actual conditions, there may not be sufficient PW available so a second source of water may be needed.

Regarding (b), addition of desalinated water to produced water is beneficial in that the salinity is lowered and volume increased but it is energy-intensive as desalinated water is typically produced by reverse osmosis (RO) of seawater. RO may require the seawater to be pressurized to ~ 60 bar (900 psi, or 6.2MPa) and product water recovery may be limited to 35 to 50%.

Regarding (c), when seawater and PW are commingled, compatibility issues may arise and result in precipitation of inorganics, e.g. barium sulfate. Also, seawater contains significant organics that can lead to biogrowth and/or reservoir souring.

Regarding (d), although seawater is readily available, there can be compatibility issues with the connate water that can ultimately lead to injectivity challenges. Also, the organics in seawater can lead to biological growth and/or reservoir souring as noted under (c).

Regarding (e), filtering of seawater to remove hardness can improve water quality by reducing the likelihood of inorganic precipitation but this adds to the specific energy requirements.

There is therefore a current need to provide an energy efficient, and therefore cost efficient, way of pumping water into hydrocarbon reservoirs to stimulate production, whilst keeping the salinity of the water as low as possible and if possible avoid adding the organics or the inorganic chemicals in seawater which can lead to biological growth, reservoir souring or precipitation of insoluble compounds.

US9227586 describes diluting a concentrated brine solution with saline water from waste drilling mud and then use the diluted solution as a frack fluid.

US7455109B2 describes a method of applying forward osmosis principles to prepare desalinated or low salinity water for waterflooding a hydrocarbon reservoir. The target total dissolved solids in the water for waterflooding is in the range of 200 - 5,000 mg/L and most preferably 1,000 to 3,000 mg/L.

The journal article by Coday et al, "The Sweet Spot of Forward Osmosis: Treatment of Produced Water, Drilling Wastewater, and other Complex and Difficult Liquid Streams," Desalination 333 (2014) 23-25, describes a number of different applications, but the main focus of the article is on two processes: (i) producing water through a two-step FO process where the second step involves removing water from the draw solution and re-concentrating the draw solution for reuse in the first step; and (ii) applying osmotic dilution to extract water from a wastewater to minimize hauling costs. US2017/369338 relates to to a method and apparatus for treatment of produced or process water from hydrocarbon production to reduce the volume of the produced or process water while simultaneously reducing the salinity of a highly saline stream, for example, the brine from a seawater desalination plant. The method includes causing a feed stream comprising produced or process water to flow through the lumen of a hollow fiber osmotic membrane which is immersed in an open channel or tank of flowing draw solution which has high salinity. In this way, water from the feed stream is drawn through the osmotic membrane by an osmotic pressure differential caused by the difference in salinity between the feed stream and the draw solution.

US2012/0037566 discloses systems and methods for osmotically assisted desalination include using a pressurized concentrate from a pressure desalination process to pressurize a feed to the desalination process. The depressurized concentrate thereby produced is used as a draw solution for a pressure-retarded osmosis process. The pressure-retarded osmosis unit produces a pressurized draw solution stream that is used to pressurize another feed to the desalination process.

US2012/0285886 discloses periodically operating a forward osmosis (FO) semi-permeable membrane element in reverse osmosis (RO), to yield product extraction on a feed side of the membrane, to flush out a concentration polarization (salt concentration of the feed side and dilution of draw solution on the draw side) across the membrane. Utilizing treated waste water to generate the flushing solution of low osmotic pressure, and gauge pressurizing the flushing solution to the gauge pressure of the draw solution to keep a constant gauge pressure of the solutions

Document US 2015/260028 A1 describes another method for injecting water into a hydrocarbon reservoir.

BRIEF SUMMARY OF THE DISCLOSURE

The invention more particularly includes a method of injecting water into a hydrocarbon reservoir as defined in claim 1.

The term "approximately the same as" in this context means +/-3 bar (0.3 MPa).

The first salinity is at least 80 g/L greater than the second salinity in terms of total dissolved solids (such as between 80 g/L and 300 g/L), optionally at least 120 g/L greater (such as between 120 and 260 g/L. The first pressure may be between 4 and 60 bar (0.4 and 6 MPa) greater than the second pressure, optionally between 6 and 40 bar (0.6 and 4 MPa) greater, such as between 10 and 30 bar (1 and 3 MPA) greater. The first stream may be produced water, which may have salinity between 120 and 290 g/L total dissolved solids, optionally between 160 and 280 g/L total dissolved solids. The second stream may be seawater or produced water of lower salinity than that of the first stream; the seawater may have salinity between 32 g/L total dissolved solids and 45 g/L total dissolved solids.

The first stream may be diluted 20 - 40%, optionally 25 - 30%, with water drawn across the membrane in step (e). The second stream may be concentrated by 30 - 70% to between 50 and 70 g/L total dissolved solids.

The pressure of the injection stream may be increased by passing it though a booster pump downstream of the osmotic membrane. This could raise the injection pressure to whatever is required for injection. Required injection pressures can vary 10 to 500 bar (1 to 50 MPa), more commonly 15 to 350 bar (1.5 to 35 MPa), such as 20 to 300 bar (2 to 30 MPa).

The invention also includes apparatus for injecting water into a hydrocarbon reservoir as defined in claim 10.

The first pump may be arranged to pump water from the first supply at a pressure between 1.5 and 60 bar (0.15 and 6 MPa), optionally between 2 and 40 bar (0.2 and 4 MPa), such as between 3 and 30 bar (0.3 and 3 MPa). The second pump may be arranged to pump water from the second supply at a pressure between 1.5 and 5 bar (0.15 and 0.5 MPa), optionally between 2 and 2.5 bar (0.2 and 0.25 MPa).

The apparatus may further comprise a booster pump downstream of the membrane element(s) and upstream of the water injection well. It may also comprise a pretreatment unit or units for treating the first and/or second water supply upstream of the membrane element(s). It may also comprise a post-treatment unit or units for injection of field chemicals (e.g. biocide, corrosion inhibitors).

Examples and various features and advantageous details thereof are explained more fully with reference to the exemplary, and therefore non-limiting, examples illustrated in the accompanying drawings and detailed in the following description. Descriptions of known starting materials and processes can be omitted so as not to unnecessarily obscure the disclosure in detail. It should be understood, however, that the detailed description and the specific examples, while indicating the preferred examples, are given by way of illustration only and not by way of limitation.

As used herein, the terms "comprises," "comprising," "includes," "including," "has," "having" or any other variation thereof, are intended to cover a non-exclusive inclusion. For example, a process, product, article, or apparatus that comprises a list of elements is not necessarily limited only those elements but can include other elements not expressly listed or inherent to such process, process, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term substantially, as used herein, is defined to be essentially conforming to the particular dimension, shape or other word that substantially modifies, such that the component need not be exact. For example, substantially cylindrical means that the object resembles a cylinder, but can have one or more deviations from a true cylinder.

Additionally, any examples or illustrations given herein are not to be regarded in any way as restrictions on, limits to, or express definitions of, any term or terms with which they are utilized. Instead these examples or illustrations are to be regarded as being described with respect to one particular example and as illustrative only. Those of ordinary skill in the art will appreciate that any term or terms with which these examples or illustrations are utilized encompass other examples as well as implementations and adaptations thereof which can or cannot be given therewith or elsewhere in the specification and all such examples are intended to be included within the scope of that term or terms. Language designating such non-limiting examples and illustrations includes, but is not limited to: "for example," "for instance," "e.g.," "In some examples," and the like.

Although the terms first, second, etc. can be used herein to describe various elements, components, regions, layers and/or sections, these elements, components, regions, layers and/or sections should not be limited by these terms. These terms are only used to distinguish one element, component, region, layer or section from another. Thus, a first element, component, region, layer or section discussed below could be termed a second element, component, region, layer or section without departing from the teachings of the present inventive concept.

BRIEF DESCRIPTION OF THE DRAWINGS

A more complete understanding of the present invention and benefits thereof may be acquired by referring to the following description taken in conjunction with the accompanying drawings in which:

Figure 1 is a schematic representing the direct injection of produced water (prior art);
Figure 2 is a schematic representing the injection of commingled produced water and RO permeate (prior art);
Figure 3 is a schematic representing the injection of commingled PW and seawater (prior art);
Figure 4 is a schematic representing the direct injection of seawater (prior art);
Figure 5 is a schematic representing the injection of nanofiltered permeate from seawater (prior art);
Figure 6 is a schematic representing the injection of commingled PW and pressure retarded osmosis (PRO) permeate in accordance with the invention;
Figure 7 is a schematic representing the injection of commingled PW and "zero pressure" PRO permeate in accordance with the invention; and
Figure 8 is a schematic representing the injection of commingled PW and pressure retarded PRO permeate in accordance with the invention, with a booster pump downstream of the PRO unit.

DETAILED DESCRIPTION

Turning now to the detailed description of the preferred arrangement or arrangements of the present invention, it should be understood that the inventive features and concepts may be manifested in other arrangements and that the scope of the invention is not limited to the embodiments described or illustrated. The scope of the invention is intended only to be limited by the scope of the claims that follow.

This technique targets secondary oil recovery applications (waterflooding) and offers a novel process that uses the natural "osmotic energy" of highly saline produced water and may provide benefits compared with the prior art techniques. Possible benefits may include:

1. Increasing the volume of water available for waterflooding,
2. Improving the quality of the water used for waterflooding by lowering its salinity and without introducing compatibility issues associated with commingling with seawater
3. Simultaneously reducing the specific pumping energy required (i.e. $kWh/m^3$)

This technique involves the application of "pressure-retarded osmosis" (PRO) technology for waterflooding in the oil & gas industry. PRO is a membrane filtration process that normally occurs at ambient temperature and uses pumps and commercially available PRO membranes. PRO membranes are similar to reverse osmosis membranes in that they allow the passage of water but can be highly effective in restricting the passage of dissolved ions, including sodium and chloride.

In PRO, there can be two inlet streams: (i) a high salinity "draw solution", e.g. hypersaline produced water at a comparatively higher hydrostatic head, and (ii) a low salinity "feed", e.g. seawater, at a comparatively lower hydrostatic head. Water is drawn from the low salinity stream through the membrane into the high salinity stream against the hydrostatic head. The primary application of PRO referenced in the literature and commercial trials relates to installations where fresh water from a river discharges in the ocean or other seawater. The salinity gradient between the low salinity river water and the higher salinity seawater is used to produce permeate which ultimately drives a turbine to produce electricity.

Water for waterflooding can be injected into a reservoir at a variety of pressures. The required injection pressure is not critical to the invention, which merely requires two water sources of different salinities such that pressurized injection of the higher salinity stream into a well can be augmented at a low energy cost by employing the osmotic energy resulting from the difference in salinity of the two sources. Pressures for injection can typically vary between 10 bar and 300 bar (1 MPa and 30 MPa) but can also be considerably higher.

In the following embodiments, examples and claims, quoted values for pressure are absolute values as opposed to gauge values.

In all the embodiments, a biocide and/or corrosion inhibitors would be added to the water for injection, as is standard current procedure. Also a pretreatment stage before introduction of fluids to an osmotic membrane unit is normal and the nature of the pretreatment will be dictated by the membrane manufacturer. For example, pretreatment to remove the suspended solids from seawater and the oil from produced water would commonly be required.

Two possible scenarios (amongst others) for application of this invention are: (i) where the draw solution is "hypersaline" produced water and the feed solution is seawater and (ii) where the draw solution is seawater and the feed is low salinity produced or process water. By "produced water", is meant water which is extracted along with hydrocarbons from a hydrocarbon well; it can originate from the natural formation (connate water) or be water which has previously been deliberately injected (flowback), or a mixture of the two. By "process water" is meant water which results from any of a number of treatment processes associated with the production and processing of hydrocarbons.

In either scenario, it is proposed that the osmotic energy arising from the difference in salinity between the two solutions is employed to assist the injection pump or, more accurately, to increase the volume flow rate whilst maintaining pressure (thus reducing specific energy), whilst at the same time reducing the salinity of the water (and in some cases removing substances which may have an adverse effect on the formation).

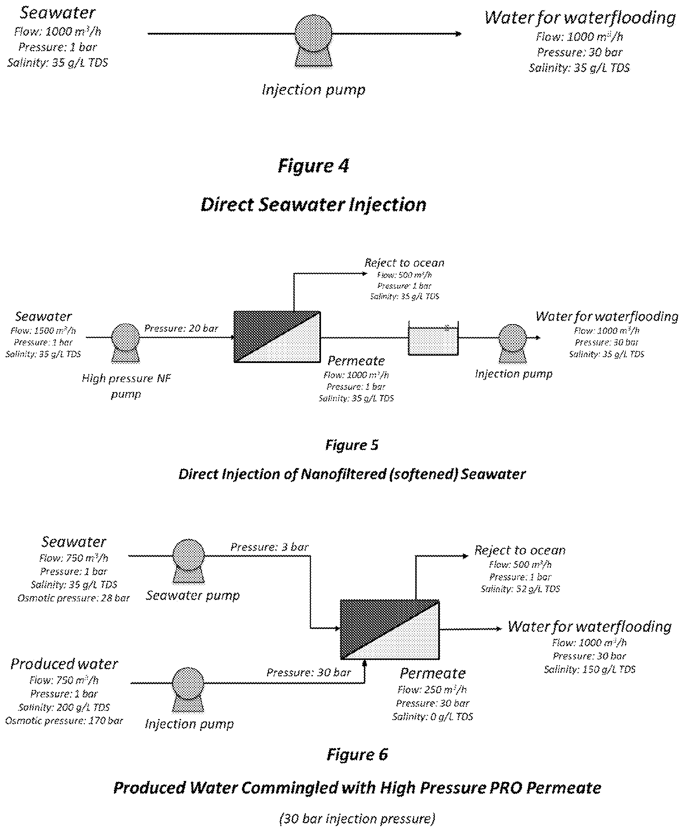

The first embodiment described below falls under case (i). Figure 6 (which also relates to Example 6 below) may assist with understanding this embodiment.

In a first, hypothetical, embodiment of the invention, it is envisaged that an oil producing rig in the North Sea has installed on it a water injection system comprising a high pressure produced water injection pump, a low pressure seawater pump and an pressure retarded osmosis unit containing one or more membrane elements. Although related to one of the examples below, Figure 6 may be helpful in understanding this embodiment as well as the second and fourth embodiments below). The elements consist of multiple hollow fiber membranes in long cylindrical housings, such as are commercially available for example from the Toyobo company. Spiral wound PRO elements with flat sheet membranes are also under development, and this construction may be an option for the future.

There are two inputs to the membrane elements. The one is produced water at a hydrostatic head of 30 bar (3 MPa) and a salinity of 200 g/L. This salinity produces an osmotic pressure of approximately 170 bar (17 MPa). The second input flow is seawater at a hydrostatic head of 3 bar (0.3 MPa) and a salinity of 35 g/L. If available on the platform, the seawater could warm seawater that has been used as cooling water on the platform. The seawater osmotic pressure is approximately 28 bar (2.8 MPa).

The two input flows pass across respective sides of the osmotic membrane, with the produced water acting as a draw solution drawing pure water across from the seawater feed. The pure water is drawn across the membrane by osmotic action (i.e. difference in osmotic pressures), because the 130 bar (13 MPa) difference in osmotic pressure exceeds the hydrostatic pressure difference of approximately 30 bar (3 MPa).

In fact, as the desalinated water comes through the membrane, the PW salinity and osmotic pressure decrease and the salinity and osmotic pressure of the seawater increases. Optimum efficiency considerations will result in a design with a 20 -40% dilution of the produced water and a seawater salinity increase of 30 - 70%. This applies to all the embodiments and examples, and the difference in salinities can drive the optimum "recovery". The energy benefit calculations set out below are not affected by this, however.

One output from the membrane element(s) is a flow comprising water having a salinity somewhat above that of seawater, which is flowed to sea at low pressure (1 bar, 0.1 MPa).

The other output is water to be injected into the reservoir. This water injection stream comprises produced water which has been diluted or commingled with pure water which has passed through the membrane - this water therefore has a salinity which is reduced compared to the produced water. The osmotic energy from the salinity difference between the two sides of the membrane is sufficient to cause permeate flow across the membrane into the produced water stream at 30 bar (3 MPa), so the pressure of the commingled output stream is maintained essentially at that of the produced water input stream. Whilst the pressure is kept essentially the same, the volume flow rate of the water to be injected is increased vs. that of the produced water. Thereby the specific energy consumption (the energy consumed per unit volume of injected water) is reduced since the additional volume flow rate of water is provided at essentially the same pressure, using osmotic energy. In addition, virtually all contaminants in the seawater feed, such as organics and undesirable inorganic ions, are prevented from passing across the membrane into the water for injection.

A second, hypothetical, embodiment is similar in most respects to the first embodiment. The only differences are (i) that the pressure at which produced water is pumped into the osmotic membrane element is approximately 60 bar (6 MPa) and the pressure at which water is injected into the well is approximately the same, and (ii) that the osmotic membrane is more robust than the membrane in the first embodiment and able to tolerate a larger pressure differential without physically failing.

The osmotic energy from the difference in salinity between the seawater and produced water is still sufficient to overcome the higher static pressure difference between the two sides of the membrane. Therefore, all the advantages of the first embodiment are provided, with additional energy benefits. The disadvantage is though that the lower osmotic energy differential means lower permeate flux and hence more membrane area will be required to achieve the same permeate flow. The energy savings and hence lower operating expense will be partially offset by the higher capital expense.

It should be pointed out that, at the time of filing, no commercial membrane for PRO exists which could tolerate a 60 bar (6 MPa) pressure drop. However, osmotic membranes are an active area of development and the inventors anticipate that a membrane which could tolerate 60 bar (6 MPa) pressure differential, or even more, may be available in the near future.

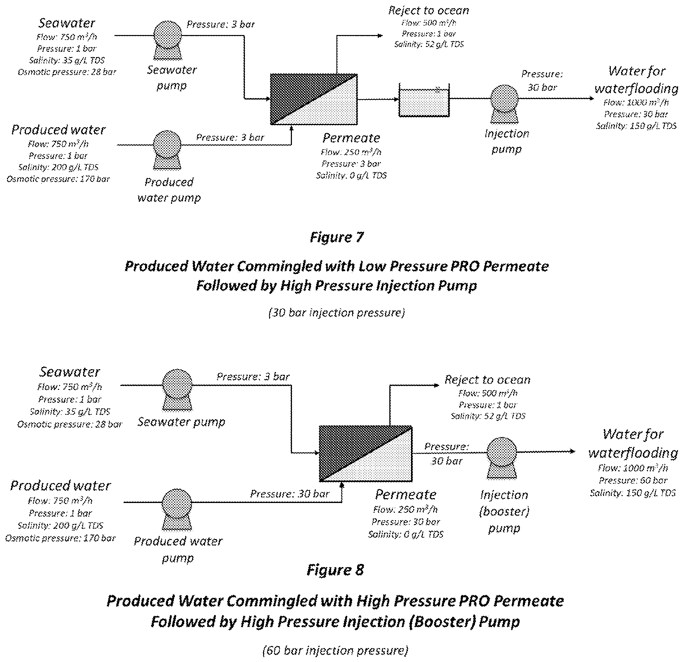

In a third, hypothetical, embodiment, it is envisaged that a rig in the North Sea requires a waterflooding injection pressure of 300 bar (30 MPa). Figure 8 may be helpful in understanding this embodiment. The 300 bar (30 MPa) pressure is more than can be created by the osmotic energy from the salinity difference between the produced water and seawater (using values from the first and second embodiments). This is addressed by pumping produced water into the PRO unit at 30 bar (3 MPa) and passing low pressure (3 bar, 0.3 MPa) seawater into the other side of the PRO unit, as with the first embodiment. The concentrated seawater is fed back to the sea at low pressure whilst the 30 bar (3 MPa) injection stream is passed to a booster pump to increase its pressure to 300 bar (30 MPa) for injection. In this embodiment the injection pressure can of course be as large as desired, and the energy benefit from increasing the volume of the flow passing into the booster pump can be increased as and when it becomes possible for PRO membranes to physically support higher pressure differentials.

In a fourth, hypothetical, embodiment, in mainland USA, a new, deep, reservoir is to be exploited under an existing older reservoir. The lower reservoir produces water at high salinity (280 g/L salinity) whilst the old high-level reservoir produces water at a relatively low salinity (50 g/L).

The upper reservoir is at the stage in its life where waterflooding is required in order to increase oil recovery. The upper reservoir therefore has had a water injection well drilled and, installed near the injection well, is a water injection system comprising a high pressure produced (PW) water injection pump, a low-pressure pump and a pressure retarded osmosis (PRO) unit.

High salinity PW from the deeper reservoir is pumped at 30 bar (3 MPa) into the PRO unit as a draw solution, whilst low salinity PW from the upper reservoir is pumped at 3 bar (0.3 MPa) into the PRO unit as the feed solution. The outputs from the PRO are a low-pressure waste stream and a stream comprising the PW from the deep well mixed with permeate from the PRO unit at 30 bar (3 MPa).

The upper reservoir does not produce enough water for waterflooding. Combining produced water from the lower reservoir with produced water from the upper reservoir provides sufficient water, and the additional water is provided at a very low cost in terms of energy because the osmotic energy arising from the difference in salinity is employed. As with the second and third embodiments, if higher injection pressure is required, then this may be provided either (i) by using a PRO unit which can tolerate a higher pressure difference (as and when stronger PRO membranes become available) and/or (ii) by providing a booster pump downstream of the PRO unit.

In a fifth embodiment, it is envisaged that a rig in the North Sea has installed on it a water injection system in accordance with the invention. The required injection water pressure is 300 bar (30 MPa). Two low pressure pumps on the rig convey a flow of PW and seawater to respective sides of a pressure retarded osmosis unit at about 2 bar (0.2 MPa). The unit is similar to the embodiments above, but there is essentially no static pressure drop across the membrane. The outputs from the PRO unit are a low pressure concentrated seawater and a low pressure injection water stream comprising commingled PW and permeate. A high pressure pump is provided downstream of the PRO unit to take the pressure up to 300 bar (30 MPa) for injection into the reservoir.

The following examples of theoretic models and calculations for both known systems and certain embodiments of the invention are given. Each example relating to the invention is provided by way of explanation of the invention, one of many embodiments of the invention, and the following examples should not be read to limit, or define, the scope of the invention.

Examples 1-8. including comparative examples 1-5

Each of these examples is a theoretical calculation of the power requirements for the individual pumps and the total power required (see Tables 1 and 2). The power requirements were calculated based on the following assumptions:

Waterflooding flow required: 1,000 m³/h

Injection pressure needed: Examples 1- 7: 30 bar (3 MPa); Example 8: 60 bar (6 MPa) PRO pressure: Examples 6 & 8: 30 bar (3 MPa); Example 7: 3 bar (0.3 MPa)

PW salinity: 200 g/L (20%) total dissolved solids (TDS)

Seawater TDS: 35 g/L

Seawater RO operating pressure: 60 bar (6 MPa)

Seawater RO recovery: 33%

Nanofilter operating pressure: 20 bar (2 MPa)

Nanofilter recovery: 67%

Temperature: 25°C

Pump efficiency: 75%

Produced water dilution by PRO permeate: 25%

For Example 8, the energy benefit is not directly comparable since the required injection pressure is assumed to be 60 bar (60 MPa).

The following pumping energy equation was used to derive these results:

$$Ph(kW) = q \, \rho \, g \, h \, / \, (3.6 \; 10^6) \qquad (1)$$

*where*

*Ph(kW) = hydraulic power*
*q = flow capacity (m³/h)*
*$\rho$ = density of fluid (kg/m³)*
*g = gravity (9.81 m/s²)*
*h = differential head (m)*

The electric power required (kW) was calculated by dividing the hydraulic power by the assumed combined efficiency for the pump and motor of 75%.

Comparative Example 1

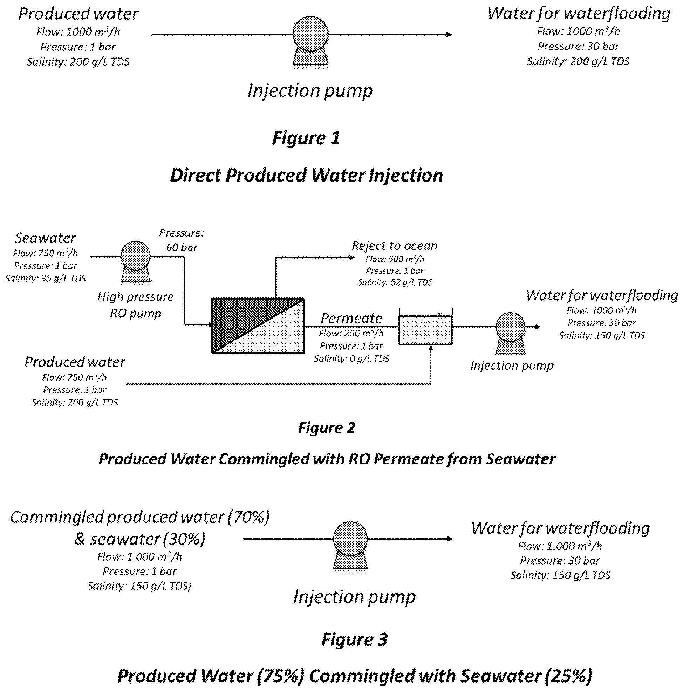

Referring to Figure 1, a common approach is simply to inject produced water directly. In this example, a high-pressure pump is used to pump high salinity produced water (200 g/L TDS) into a reservoir at 30 bar (3 MPa) and a rate of 1000 m³/h. Calculated parameters are given below in Table 1.

Comparative Example 2

Referring to Figure 2, another approach is to dilute the produced water with desalinated seawater from a reverse osmosis process. This is done in order to reduce the salinity of the PW since reducing salinity is thought to have a favourable effect on minimizing connate water compatibility issues and reduce injectivity challenges. In this example, PW with a salinity of 200 g/L TDS is fed to a mixing tank using a low pressure pump. Seawater is pumped at 60 bar (6 MPa) through a reverse osmosis unit. A 60 bar (6 MPa) pressure drop is maintained across the RO membrane, which provides a desalinated pure or low salinity permeate at 1 bar (0.1 MPa) which is also fed to the mixing tank. A reject flow of comprises increased salinity seawater at 1 bar (0.1 MPa). The mingled water in the tank has a salinity of 150 g/L TDS and this is then pumped at 30 bar (3 MPa) into the reservoir. Calculated parameters are given below in Table 1. Although salinity is reduced and undesirable constituents of the seawater are eliminated by the RO, this process is costly in energy. Because the osmotic unit is a reverse osmosis unit, it is possible to achieve a static pressure drop of 60 bar (6 MPa) across the membrane using currently available technology.

Comparative Example 3

Referring to Figure 3, an alternative method for reducing PW salinity is simply to commingle it with seawater. A disadvantage of this approach is that the undesirable constituents of seawater are not removed. Of particular concern is the formation of barium sulfate. PW can be high in barium and seawater typically contains sufficient sulfate that when mixed with PW containing barium, the solubility limit for barium sulfate can be exceeded and barium sulfate may precipitate. This can lead to plugging of the reservoir and higher pumping pressures being required to achieve the desired waterflooding flow. The organics in the seawater can also lead to undesirable biological growth in the reservoir, referred to as "reservoir souring". In this example, a mixture of seawater and PW having a salinity of 150 g/L TDS is pumped at 30 bar (3 MPa) and a rate of 1000 m$^3$/h into the reservoir. Calculated results are shown in Table 1.

Comparative Example 4

Seawater is often simply injected directly. In situations where seawater is plentiful, this is an attractive option which is inexpensive energetically, but it results in the injection of considerable amounts of undesirable seawater contaminants into the reservoir. The dissolved minerals in seawater can precipitate with minerals in the connate water and lead to similar reservoir plugging issues as described in Example 3. Also, as noted in Example 3, the organics in the seawater can also lead to reservoir souring. In this example, seawater with a salinity of 35 g/L TDS is injected into the reservoir at 30 bar (3 MPa) and a rate of 1000 m$^3$/h.

Comparative Example 5

Figure 5 relates to this example. To reduce the contaminants in seawater, nanofiltration can be used. In this example, seawater is pumped at 20 bar (2 MPa, a typical value for a nanofiltration unit) and a rate of 1500 m3 /h into a nanofiltration (NF) unit. A 500 m$^3$/h flow of reject water from the NF unit flows from the unit, whilst a 1000 m$^3$/h flow at 1 bar (0.1 MPa) flows to a storage tank from where it is pumped at 30 bar (3 MPa) and a rate of 1000 m$^3$/h into the reservoir. The salinity is changed only slightly by the removal of divalent ions by the NF unit. Calculated results are shown in Table 1. This approach is comparatively energy intensive.

Table 1 - Comparative Examples 1-5 (prior art)

| Ex | Description | Pump | Pumping power requirements | | | | | | Water to waterflooding | | |
|---|---|---|---|---|---|---|---|---|---|---|---|
| | | | Flow | Head | TDS | Density | Power | Total Power | Flow | TDS | Energy |
| | | | (m$^3$/h) | (bar) | (g/L) | - | (kW) | (kW) | (m$^2$/hr) | (g/L) | (kWh/m$^2$) |
| 1 | Produced water | Injection pump | 1000 | 30 | 200 | 1.15 | 1273 | 1273 | 1000 | 200 | 1.27 |
| 2 | Produced water with RO permeate | High pressure RO pump | 750 | 60 | 35 | 1.03 | 1709 | 2939 | 1000 | 150 | 2.94 |
| | | Injection pump | 1000 | 30 | 150 | 1.11 | 1230 | | | | |
| 3 | PW & seawater commingled (70%/30%) | Injection pump | 1000 | 30 | 150 | 1.11 | 1234 | 1234 | 1000 | 150 | 1.23 |
| 4 | Seawater | Injection pump | 1000 | 30 | 35 | 1.03 | 1140 | 1140 | 1000 | 35 | 1.14 |
| 5 | NF permeate | High pressure NF pump | 1500 | 20 | 35 | 1.03 | 1140 | 2279 | 1000 | 35 | 2.28 |
| | | Injection pump | 1000 | 30 | 35 | 1.03 | 1140 | | | | |

## Example 6

This Example (see Figure 6) also assumes the same requirements as the comparative examples in terms of pressure and flow rate of injected water. A high pressure pump conveys PW with a salinity of 200 g/L TDS at 30 bar (3 MPa) and a flow rate of 750 m³/h to a pressure retarded osmosis (PRO) unit as the "draw" stream. Another low pressure pump conveys seawater (salinity 35 g/1 TDS) at 3 bar (0.3 MPa) and a flow rate of 750 m³/h to the PRO unit as the "feed" stream.

Because the osmotic pressure differential exceeds the hydrostatic head differential, pure water is drawn across the PRO membrane against the static pressure head from the seawater stream to the PW stream. At the assumed permeate recovery rate of 33%, the permeate flow is 250 m³/h. The permeate flow combined with the original PW flow is now 1000 m³/h and the pressure remains at 30 bar (3 MPa). Through the addition of the permeate, the salinity of the PW has been reduced by 25% from 200 g/L to 150 g/L TDS. This flow is injected directly into the reservoir. Salinity is reduced and seawater contaminants removed, whilst a 1000 m³/h flow rate of injected water is achieved for the same energy cost of pumping 750 m³/h at the same pressure. 500 m³/h of increased salinity seawater flows back to the sea at 1 bar (0.1 MPa). Calculated results are shown in Table 2.

## Example 7

In the event that the required injection pressure is higher than the limit for commercially available PRO membranes, or simply because the existing equipment arrangement favours having the PRO unit upstream, it may be desirable to have the high-pressure pump located after the PRO unit. Figure 7 shows an example of this arrangement. Low pressure pumps convey 750 m³/h of both PW and seawater streams each at 3 bar (0.3 MPa) to the PRO unit. Although the term "pressure retarded osmosis" is used, in fact there is a negligible pressure increase across the membrane in this example and the process is more accurately referred to as "osmotic dilution" of the produced water. The 30 bar (3 MPa) injection pressure can be higher or lower but is used in this example to provide an effective method for comparing the various configurations. Although energy savings are not realized, the key benefits of i) more water available for waterflooding, ii) lower salinity and iii) less reservoir incompatibility issues, are still realized.

A 500 m³/h reject stream of increased salinity seawater flows from the unit. The other output from the PRO unit is a mixture of a 250 m³/h permeate stream of desalinated seawater and the 750 m³/h PW stream. This 1000 m³/h output has salinity 150 m³/h and flows to a storage tank before being pumped at 30 bar (3 MPa) by an injection pump into the reservoir. Calculated results are shown in Table 2. Although not as energetically favourable as Example 6, this example compares well energetically to other systems which use desalinated seawater.

## Example 8

In this example (see Figure 8), the required injection pressure is 60 bar (6 MPa). This is higher than the other examples and therefore the energy benefits cannot be compared but the example is nonetheless provided for completeness. Using technology available today, a PRO membrane cannot tolerate a 60 bar (6 MPa) static pressure difference. One way of providing a higher pressure for injection whilst still obtaining a benefit from the osmotic energy from the salinity difference is to provide a downstream booster pump. A 30 bar (3 MPa) input PW stream to the PRO unit is provided. The seawater stream enters the PRO unit at low pressure and the permeate joins the PW stream exiting the PRO unit to make a commingled injection stream at 30 bar (3 MPa). This injection stream is then passed through a booster pump to take the pressure up to 60 bar (6 MPa).

Table 2 - Examples 6. 7 and 8

| | Description | Pump | Pumping power requirements | | | | | | Water to waterflooding | | |
|---|---|---|---|---|---|---|---|---|---|---|---|
| | | | Flow | Head | TDS | Density | Power | Total Power | Flow | TDS | Energy |
| | | | (m³/h) | (bar) | (g/L) | - | (kW) | (m³/h) | (m³/hr) | (g/L) | (kWh/m³) |
| 6 | Produced water with PRO permeate | Seawater feed pump | 750 | 2 | 35 | 1.03 | 57 | 1012 | 1000 | 150 | 1.01 |
| | | Injection pump | 750 | 30 | 200 | 1.15 | 955 | | | | |

(continued)

| | Description | Pump | Pumping power requirements | | | | | Total Power | Water to waterflooding | | |
|---|---|---|---|---|---|---|---|---|---|---|---|
| | | | Flow | Head | TDS | Density | Power | | Flow | TDS | Energy |
| | | | (m³/h) | (bar) | (g/L) | - | (kW) | (m³/h) | (m³/hr) | (g/L) | (kWh/m³) |
| 7 | Produced water with PRO permeate | Seawater feed pump | 750 | 2 | 35 | 1.03 | 57 | 1350 | 1000 | 150 | 1.35 |
| | | PW feed pump | 750 | 2 | 200 | 1.15 | 64 | | | | |
| | | Injection pump | 1000 | 30 | 150 | 1.11 | 1230 | | | | |
| 8 | Produced water with PRO permeate | Seawater feed pump | 750 | 2 | 35 | 1.03 | 57 | 2241 | 1000 | 150 | 2.24 |
| | | PW feed pump | 750 | 30 | 200 | 1.15 | 955 | | | | |
| | | Downstream booster | 1000 | 30 | 150 | 1.11 | 1230 | | | | |

The advantages of the invention, as exemplified in Example 6, are summarized below in comparison to the various known methodologies of Examples 1 to 5.

Example 1: Direct produced water injection: The invention lowers the energy consumption by 21% and improves the quality of the water sent to waterflooding by lowering its salinity by 25%.

Example 2: PW commingled with RO permeate: The invention lowers energy consumption by 66% while sending comparable quality water to waterflooding

Example 3: PW commingled with seawater: The invention lowers energy consumption by 18% and improves water quality because inorganic and organic contaminants present in seawater are not added.

Example 4: Direct seawater injection: The invention lowers energy consumption by 11% and although the salinity is higher, it improves water quality because inorganic and organic contaminants present in seawater are not injected into the reservoir.

Example 5: Nanofiltered (softened) seawater: The invention lowers energy consumption by 56% and although the salinity is higher, compatibility issues with formation are not expected since the water was obtained from the formation.

In closing, it should be noted that the discussion of any reference is not an admission that it is prior art to the present invention, especially any reference that may have a publication date after the priority date of this application. At the same time, each and every claim below is hereby incorporated into this detailed description or specification as additional embodiments of the present invention.

Although the systems and processes described herein have been described in detail, it should be understood that various changes, substitutions, and alterations can be made without departing from the scope of the invention as defined by the following claims.

REFERENCES

All of the references cited herein are listed again here for convenience:

US9227856
US7455109B2
Coday et at, "The Sweet Spot of Forward Osmosis: Treatment of Produced Water, Drilling Wastewater, and other Complex and Difficult Liquid Streams," Desalination 333 (2014) 23-25
US2017/036933
US2012/0037566
US2012/028588
US2015/260028

**Claims**

1. A method of injecting water into a hydrocarbon reservoir, comprising:

   (a) passing a first stream of water, such as produced water, having a first salinity at a first hydrostatic pressure across a first, draw side of an osmotic membrane;
   (b) passing a second stream of water having a second salinity at a second hydrostatic pressure across a second, feed side of the membrane, optionally wherein the second stream is seawater or produced water;
   (c) wherein the first hydrostatic pressure is approximately the same as or is greater than the second hydrostatic pressure;
   (d) whereby water is drawn across the membrane from the second stream into the first stream by osmotic energy to produce an injection stream of water at approximately the first pressure and having a salinity lower than the first salinity; and
   (e) injecting the injection stream of water into a hydrocarbon reservoir;
   **characterised in that**
   (f) the first salinity is at least 80 g/L greater than the second salinity in terms of total dissolved solids.

2. The method of claim 1 wherein the first salinity is at least 120 g/L greater.

3. The method of claims 1 or 2 wherein the first pressure is between 4 and 60 bar (0.4 and 6 MPa) greater than the second pressure, optionally between 6 and 40 bar (0.6 and 4 MPa) greater, such as between 10 and 30 bar (1 and 3 MPA) greater.

4. The method of any preceding claim, wherein the pressure of the injection stream is increased by passing it though a booster pump downstream of the osmotic membrane.

5. The method of any preceding claim wherein the first stream is produced water of salinity between 120 and 290 g/L total dissolved solids, optionally between 160 and 280 g/L total dissolved solids.

6. The method of any preceding claim wherein the second stream is seawater of salinity between 32 g/L total dissolved solids and 45 g/L total dissolved solids.

7. The method of any preceding claim wherein the first stream is diluted 20 - 40%, optionally 25 - 30%, with water drawn across the membrane in step (e).

8. The method of any preceding claim wherein the first and/or second streams are pretreated prior to being passed across the osmotic membrane.

9. A method of recovering hydrocarbons from a subterranean reservoir, comprising injecting water into the reservoir using the method of any of claims 1 to 8.

10. Apparatus for injecting water into a hydrocarbon reservoir, the apparatus comprising:

    (a) an osmotic membrane element such as a pressure-retarded osmosis membrane element;
    (b) a first pump communicating with a first, draw side of the osmosis membrane element and with a first supply of water at a first salinity at a first hydrostatic pressure; and
    (c) a second pump communicating with a second, feed side of the osmotic membrane element and communicating with a second supply of water at a second salinity, lower than that of the first salinity at a second hydrostatic pressure approximately the same as or less than the first hydrostatic pressure;
    (d) the draw side of the osmotic membrane element having an output configured to communicate an injection stream of water at approximately the first hydrostatic pressure and having a salinity lower than the first salinity directly or indirectly with a water injection well of a hydrocarbon reservoir;

    **characterised in that** the first salinity is at least 80 g/L greater than the second salinity in terms of total dissolved solids.

11. The apparatus of claim 10, wherein the first pump is arranged to pump water from the first supply at a pressure between 1.5 and 60 bar (0.15 and 6 MPa), optionally between 2 and 40 bar (0.2 and 4 MPa), such as between 3 and 30 bar (0.3 and 3 MPa).

12. The apparatus of claims 10 or 11, wherein the second pump is arranged to pump water from the second supply at a pressure between 1.5 and 5 bar (0.15 and 0.5 MPa), optionally between 2 and 2.5 bar (0.2 and 0.25 MPa).

13. The apparatus of any of claims 10 to 12, further comprising a booster pump downstream of the membrane element(s) and upstream of the water injection well.

14. The apparatus of any of claims 10 to 13, further comprising a pretreatment unit or units for treating the first and/or second water supply upstream of the membrane element(s).

15. An installation for the production of hydrocarbons from a subterranean hydrocarbon reservoir, the installation comprising an apparatus as claimed in any of claims 10 to 14, wherein the said output of the osmotic membrane element(s) is connected, directly or indirectly, with a water injection well of a hydrocarbon reservoir.


**Patentansprüche**

1. Verfahren zum Einspritzen von Wasser in ein Kohlenwasserstoffreservoir, umfassend:

    (a) Leiten eines ersten Wasserstroms, wie beispielsweise Produktionswasser, das einen ersten Salzgehalt aufweist, mit einem ersten hydrostatischen Druck über eine erste Zugseite einer osmotischen Membran;
    (b) Leiten eines zweiten Wasserstroms, der einen zweiten Salzgehalt aufweist, mit einem zweiten hydrostatischen Druck über eine zweite Zulaufseite der Membran, wobei der zweite Strom optional Meerwasser oder Produktionswasser ist;
    (c) wobei der erste hydrostatische Druck annähernd der gleiche wie oder größer als der zweite hydrostatische Druck ist;
    (d) wobei Wasser durch osmotische Energie aus dem zweiten Strom über die Membran in den ersten Strom gezogen wird, um einen Einspritzwasserstrom mit annähernd dem ersten Druck und einen Salzgehalt aufweisend, der niedriger als der erste Salzgehalt ist, zu produzieren; und
    (e) Einspritzen des Einspritzwasserstroms in ein Kohlenwasserstoffreservoir;
    **dadurch gekennzeichnet, dass**
    (f) der erste Salzgehalt um mindestens 80 g/L größer als der zweite Salzgehalt in Bezug auf die gesamten gelösten Feststoffe ist.

2. Verfahren nach Anspruch 1, wobei der erste Salzgehalt um mindestens 120 g/L größer ist.

3. Verfahren nach Anspruch 1 oder 2, wobei der erste Druck zwischen 4 und 60 Bar (0,4 und 6 MPa) größer als der zweite Druck, optional zwischen 6 und 40 Bar (0,6 und 4 MPa) größer, wie beispielsweise zwischen 10 und 30 Bar (1 und 3 MPa) größer ist.

4. Verfahren nach einem vorstehenden Anspruch, wobei der Druck des Einspritzstroms durch Durchleiten durch eine Druckerhöhungspumpe stromabwärts der osmotischen Membran erhöht wird.

5. Verfahren nach einem vorstehenden Anspruch, wobei der erste Strom Produktionswasser mit einem Salzgehalt zwischen 120 und 290 g/L an gesamten gelösten Feststoffen, optional zwischen 160 und 280 g/L an gesamten gelösten Feststoffen ist.

6. Verfahren nach einem vorstehenden Anspruch, wobei der zweite Strom Meerwasser mit einem Salzgehalt zwischen 32 g/L an gesamten gelösten Feststoffen und 45 g/L an gesamten gelösten Feststoffen ist.

7. Verfahren nach einem vorstehenden Anspruch, wobei der erste Strom zu 20-40 %, optional 25-30 % mit Wasser verdünnt ist, das in Schritt (e) über die Membran gezogen wird.

8. Verfahren nach einem vorstehenden Anspruch, wobei der erste und/oder der zweite Strom, bevor sie durch die osmotische Membran geleitet werden, vorbehandelt werden.

9. Verfahren zur Gewinnung von Kohlenwasserstoffen aus einem unterirdischen Reservoir, umfassend Einspritzen von Wasser in das Reservoir unter Verwendung des Verfahrens nach einem der Ansprüche 1 bis 8.

10. Einrichtung zum Einspritzen von Wasser in ein Kohlenwasserstoffreservoir, wobei die Einrichtung umfasst:

(a) ein osmotisches Membranelement, wie beispielsweise ein druckverzögertes Osmosemembranelement;
(b) eine erste Pumpe, die mit einer ersten Zugseite des Osmosemembranelements und mit einer ersten Wasserversorgung mit einem ersten Salzgehalt und einem ersten hydrostatischen Druck verbunden ist; und
(c) eine zweite Pumpe, die mit einer zweiten Zulaufseite des osmotischen Membranelements verbunden ist, und mit einer zweiten Wasserversorgung mit einem zweiten Salzgehalt, der niedriger als der erste Salzgehalt ist, mit einem zweiten hydrostatischen Druck verbunden ist, der annähernd der gleiche wie oder kleiner als der erste hydrostatische Druck ist;
(d) die Zugseite des osmotischen Membranelements einen Ausgang aufweist, der konfiguriert ist, um einen Einspritzwasserstrom mit annähernd dem ersten hydrostatischen Druck und einen Salzgehalt aufweisend, der niedriger als der erste Salzgehalt ist, direkt oder indirekt mit einer Wassereinspritzsbohrung eines Kohlenwasserstoffreservoirs zu verbinden;

**dadurch gekennzeichnet, dass** der erste Salzgehalt um mindestens 80 g/L größer als der zweite Salzgehalt in Bezug auf die gesamten gelösten Feststoffe ist.

11. Einrichtung nach Anspruch 10, wobei die erste Pumpe angeordnet ist, um Wasser aus der ersten Versorgung mit einem Druck zwischen 1,5 und 60 bar (0,15 und 6 MPa), optional zwischen 2 und 40 Bar (0,2 und 4 MPa), beispielsweise zwischen 3 und 30 Bar (0,3 und 3 MPa), zu pumpen.

12. Einrichtung nach Anspruch 10 oder 11, wobei die zweite Pumpe angeordnet ist, um Wasser aus der zweiten Versorgung mit einem Druck zwischen 1,5 und 5 Bar (0,15 und 0,5 MPa), optional zwischen 2 und 2,5 Bar (0,2 und 0,25 MPa), zu pumpen.

13. Einrichtung nach einem der Ansprüche 10 bis 12, die weiter eine Druckerhöhungspumpe stromabwärts des/der Membranelements/Membranelemente und stromaufwärts der Wassereinspritzsbohrung umfasst.

14. Einrichtung nach einem der Ansprüche 10 bis 13, die weiter eine Vorbehandlungseinheit oder Einheiten zur Behandlung der ersten und/oder zweiten Wasserversorgung stromaufwärts des/der Membranelements/Membranelemente umfasst.

15. Anlage zur Produktion von Kohlenwasserstoffen aus einem unterirdischen Kohlenwasserstoffreservoir, wobei die Anlage eine Einrichtung nach einem der Ansprüche 10 bis 14 umfasst, wobei der Ausgang des/der osmotischen Membranelements/Membranelemente direkt oder indirekt mit einer Wassereinspritzsbohrung eines Kohlenwasserstoffreservoirs verbunden ist.

**Revendications**

1. Procédé d'injection d'eau dans un réservoir d'hydrocarbures, comprenant :

(a) le passage d'un premier flux d'eau, tel que de l'eau produite, présentant une première salinité à une première pression hydrostatique sur un premier côté aspiration d'une membrane osmotique ;
(b) le passage d'un second flux d'eau présentant une seconde salinité à une seconde pression hydrostatique sur un second côté alimentation de la membrane, éventuellement dans lequel le second flux est de l'eau de mer ou de l'eau produite ;
(c) dans lequel la première pression hydrostatique est approximativement la même que ou est supérieure à la seconde pression hydrostatique ;
(d) selon lequel, l'eau aspirée à travers la membrane du second flux dans le premier flux par l'énergie osmotique pour produire un flux d'injection d'eau à approximativement la première pression et présentant une salinité inférieure à la première salinité ; et
(e) l'injection du flux d'injection d'eau dans un réservoir d'hydrocarbures ;
**caractérisé en ce que**
(f) la première salinité est supérieure d'au moins 80 g/L à la seconde salinité en ce qui concerne les matières solides totales dissoutes.

**2.** Procédé selon la revendication 1, dans lequel la première salinité est supérieure d'au moins 120 g/L.

**3.** Procédé selon les revendications 1 ou 2, dans lequel la première pression est entre 4 et 60 bars (0,4 à 6 MPa) plus élevée que la seconde pression, éventuellement entre 6 et 40 bars (0,6 à 4 MPa) plus élevée, telle qu'entre 10 et 30 bars (1 à 3 MPa) plus élevée.

**4.** Procédé selon une quelconque revendication précédente, dans lequel la pression du flux d'injection est augmentée par son passage à travers une pompe de surpression en aval de la membrane osmotique.

**5.** Procédé selon une quelconque revendication précédente, dans lequel le premier flux est de l'eau produite dont la salinité est comprise entre 120 et 290 g/L de matières solides totales dissoutes, éventuellement entre 160 et 280 g/L de matières solides totales dissoutes.

**6.** Procédé selon une quelconque revendication précédente, dans lequel le second flux est de l'eau de mer d'une salinité comprise entre 32 g/L de matières solides totales dissoutes et 45 g/L de matières solides totales dissoutes.

**7.** Procédé selon une quelconque revendication précédente, dans lequel le premier flux est dilué à 20 - 40 %, éventuellement à 25 - 30 %, avec de l'eau aspirée à travers la membrane à l'étape (e).

**8.** Procédé selon une quelconque revendication précédente, dans lequel le premier et/ou le second flux est prétraité avant d'être amené à traverser la membrane osmotique.

**9.** Procédé de récupération d'hydrocarbures à partir d'un réservoir souterrain, comprenant l'injection d'eau dans le réservoir en utilisant le procédé selon l'une quelconque des revendications 1 à 8.

**10.** Appareil d'injection d'eau dans un réservoir d'hydrocarbures, l'appareil comprenant :

(a) un élément de membrane osmotique tel qu'un élément de membrane d'osmose à pression retardée ;
(b) une première pompe communiquant avec un premier côté aspiration de l'élément de membrane d'osmose et présentant une première alimentation en eau d'une première salinité à une première pression hydrostatique ; et
(c) une seconde pompe communiquant avec un second côté alimentation de l'élément de membrane osmotique et communiquant avec une seconde alimentation en eau d'une seconde salinité, inférieure à celle de la première salinité à une seconde pression hydrostatique approximativement égale ou inférieure à la première pression hydrostatique ;
(d) le côté aspiration de l'élément de membrane osmotique présentant une sortie configurée pour communiquer un flux d'injection d'eau à approximativement la première pression hydrostatique et présentant une salinité inférieure à la première salinité directement ou indirectement avec un puits d'injection d'eau d'un réservoir d'hydrocarbures;

**caractérisé en ce que** la première salinité est supérieure d'au moins 80 g/L à la seconde salinité en ce qui concerne les matières solides totales dissoutes.

**11.** Appareil selon la revendication 10, dans lequel la première pompe est agencée pour pomper l'eau de la première alimentation à une pression comprise entre 1,5 et 60 bars (0,15 et 6 MPa), éventuellement entre 2 et 40 bars (0,2 et 4 MPa), telle qu'entre 3 et 30 bars (0,3 et 3 MPa).

**12.** Appareil selon les revendications 10 ou 11, dans lequel la seconde pompe est agencée pour pomper l'eau de la seconde alimentation à une pression comprise entre 1,5 et 5 bars (0,15 et 0,5 MPa), éventuellement entre 2 et 2,5 bars (0,2 et 0,25 MPa).

**13.** Appareil selon l'une quelconque des revendications 10 à 12, comprenant en outre une pompe de surpression en aval du ou des éléments de membrane et en amont du puits d'injection d'eau.

**14.** Appareil selon l'une quelconque des revendications 10 à 13, comprenant en outre une ou plusieurs unités de prétraitement pour traiter la première et/ou la seconde alimentation en eau en amont du ou des éléments membranaires.

**15.** Installation destinée à la production d'hydrocarbures à partir d'un réservoir d'hydrocarbures souterrain, l'installation comprenant un appareil selon l'une quelconque des revendications 10 à 14, dans lequel ladite sortie du ou des éléments de membrane osmotique est reliée, directement ou indirectement, à un puits d'injection d'eau d'un réservoir d'hydrocarbures.

**Produced water**
Flow: 1000 m³/h
Pressure: 1 bar
Salinity: 200 g/L TDS

**Water for waterflooding**
Flow: 1000 m³/h
Pressure: 30 bar
Salinity: 200 g/L TDS

*Injection pump*

## Figure 1

## Direct Produced Water Injection

**Seawater**
Flow: 750 m³/h
Pressure: 1 bar
Salinity: 35 g/L TDS

Pressure: 60 bar

**High pressure RO pump**

**Reject to ocean**
Flow: 500 m³/h
Pressure: 1 bar
Salinity: 52 g/L TDS

**Water for waterflooding**
Flow: 1000 m³/h
Pressure: 30 bar
Salinity: 150 g/L TDS

**Permeate**
Flow: 250 m³/h
Pressure: 1 bar
Salinity: 0 g/L TDS

*Injection pump*

**Produced water**
Flow: 750 m³/h
Pressure: 1 bar
Salinity: 200 g/L TDS

## Figure 2

## Produced Water Commingled with RO Permeate from Seawater

**Commingled produced water (70%) & seawater (30%)**
Flow: 1,000 m³/h
Pressure: 1 bar
Salinity: 150 g/L TDS)

**Water for waterflooding**
Flow: 1,000 m³/h
Pressure: 30 bar
Salinity: 150 g/L TDS

*Injection pump*

## Figure 3

## Produced Water (75%) Commingled with Seawater (25%)

**Seawater**
Flow: 1000 m³/h
Pressure: 1 bar
Salinity: 35 g/L TDS

Injection pump

**Water for waterflooding**
Flow: 1000 m³/h
Pressure: 30 bar
Salinity: 35 g/L TDS

## Figure 4

### Direct Seawater Injection

Reject to ocean
Flow: 500 m³/h
Pressure: 1 bar
Salinity: 35 g/L TDS

**Seawater**
Flow: 1500 m³/h
Pressure: 1 bar
Salinity: 35 g/L TDS

High pressure NF
pump

Pressure: 20 bar

Permeate
Flow: 1000 m³/h
Pressure: 1 bar
Salinity: 35 g/L TDS

Injection pump

**Water for waterflooding**
Flow: 1000 m³/h
Pressure: 30 bar
Salinity: 35 g/L TDS

## Figure 5

### Direct Injection of Nanofiltered (softened) Seawater

**Seawater**
Flow: 750 m³/h
Pressure: 1 bar
Salinity: 35 g/L TDS
Osmotic pressure: 28 bar

Seawater pump

Pressure: 3 bar

Reject to ocean
Flow: 500 m³/h
Pressure: 1 bar
Salinity: 52 g/L TDS

**Produced water**
Flow: 750 m³/h
Pressure: 1 bar
Salinity: 200 g/L TDS
Osmotic pressure: 170 bar

Injection pump

Pressure: 30 bar

Permeate
Flow: 250 m³/h
Pressure: 30 bar
Salinity: 0 g/L TDS

**Water for waterflooding**
Flow: 1000 m³/h
Pressure: 30 bar
Salinity: 150 g/L TDS

## Figure 6

### Produced Water Commingled with High Pressure PRO Permeate

*(30 bar injection pressure)*

17

**Figure 7**

**Produced Water Commingled with Low Pressure PRO Permeate
Followed by High Pressure Injection Pump**

*(30 bar injection pressure)*

**Figure 8**

**Produced Water Commingled with High Pressure PRO Permeate
Followed by High Pressure Injection (Booster) Pump**

*(60 bar injection pressure)*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7455109 B
- US 9227586 B
- US 7455109 B2
- US 20170369338 A
- US 20120037566 A
- US 20120285886 A
- US 2015260028 A1
- US 9227856 B
- US 2017036933 A
- US 2012028588 A
- US 2015260028 A

**Non-patent literature cited in the description**

- **CODAY et al.** The Sweet Spot of Forward Osmosis: Treatment of Produced Water, Drilling Wastewater, and other Complex and Difficult Liquid Streams. *Desalination*, 2014, vol. 333, 23-25
- **CODAY**. The Sweet Spot of Forward Osmosis: Treatment of Produced Water, Drilling Wastewater, and other Complex and Difficult Liquid Streams. *Desalination*, 2014, vol. 333, 23-25